Europäisches Patentamt

European Patent Office

Office européen des brevets

(11) Numéro de publication : **0 639 420 A1**

(12) **DEMANDE DE BREVET EUROPEEN**

(21) Numéro de dépôt : **94112722.7**

(22) Date de dépôt : **16.08.94**

(51) Int. Cl.$^6$ : **B23H 7/20, B23H 7/30**

(30) Priorité : **20.08.93 CH 2484/93**

(43) Date de publication de la demande :
**22.02.95 Bulletin 95/08**

(84) Etats contractants désignés :
**BE CH DE FR GB IT LI LU NL PT**

(71) Demandeur : **CHARMILLES TECHNOLOGIES
S.A.**
**8-10, rue du Pré-de-la-Fontaine
Zone Ind. de Satigny, Genève (CH)**

(72) Inventeur : **Delpretti, Roger**
**10, Chemin de l'Echerpine**
**CH-1214 Vernier (CH)**
Inventeur : **Tricarico, Claudio**
**16 Bd. Louis Dapples**
**CH-1800 Vevey (CH)**

(74) Mandataire : **Hugelin, Christiane**
**c/o CHARMILLES TECHNOLOGIES SA**
**Case postale 373**
**CH-1217 Meyrin 1 (CH)**

(54) **Dispositif et procédé d'électroérosion selon trois dimensions avec une électrode-outil rotative de forme simple.**

(57) Simulateur pour une méthode d'usinage EDM dans laquelle une programmation par ordinateur remplace la fabrication d'électrodes-outil de forme spéciale et dans laquelle une cavité ou un relief à trois dimensions est usiné en érodant à grande vitesse des couches de matière incrémentales successives grâce à une électrode-outil de forme simple et indépendante de la cavité à évider. Il calcule la prise de matière théorique le long de la trajectoire programmée pour l'outil, programme les vitesses d'usinage appropriées en chaque point de cette trajectoire, et envoie les signaux correspondants à l'unité de commande numérique qui contrôle le mouvement tridimentionnel relatif entre l'électrode-outil et la pièce à éroder.

Le simulateur selon la présente invention coopère avec des moyens informatiques pour déterminer une trajectoire de l'électrode-outil telle que sa pointe balaie sillon par sillon, chaque couche successive ; il coopère également avec un compensateur d'usure destiné à programmer une avance axiale additionnelle de l'outil destinée à compenser en continu son usure longitudinale de manière à maintenir son extrémité active parallèle au plan de la couche à éroder.

EP 0 639 420 A1

La présente invention concerne un dispositif et un procédé d'électro-érosion (EDM) dans lesquels une programmation sur ordinateur remplace la réalisation mécanique d'électrodes de forme et fait ainsi gagner beaucoup de temps à l'utilisateur: on usine une cavité ou un relief à trois dimensions en évidant la pièce à grande vitesse et par couches successives (c.à.d. par "peelpocketing") avec une électrode-outil rotative, de forme simple et indépendante du contour souhaité ("fraisage EDM" par couches); on évite la fastidieuse conception et fabrication d'électrodes de forme complexes grâce à une simulation de l'usinage.

On connait déjà (demande de brevet européenne EP 555818 de la demanderesse) une méthode de fraisage EDM par couches dans laquelle la longueur d' électrodes-outil de forme simple diminue rapidement, mais sans usure latérale apparente; cette méthode permet de déduire par calcul la valeur théorique de l'usure longitudinale de l'électrode-outil à partir de données technologiques préexistantes et de sa géométrie et de la compenser en programmant un mouvement additionnel régulier correspondant à cette valeur théorique; contrairement au reste de l'état de la technique, cette méthode de compensation ne fait pas appel à la mesure en continu de l'usure ou à un calibrage et à une correction périodiques, en faisant par exemple glisser une longue électrode fine dans un porte-outil.

Des moyens informatiques de type connu (par exemple un logiciel CAD/CAM) décomposent la géométrie du volume tridimensionnel à évider en une superposition de feuillets (ou couches) virtuelles parallèles et mémorisent cette décomposition. Puis, comme l'extrémité active de l'électrode-outil garde théoriquement un profil invariant, fonction en général de sa section et de l'épaisseur du feuillet, et usine donc un sillon de largeur invariante, on programme grâce à ces moyens un balayage (ou parcours ou trajectoire à usure nulle) selon lequel elle va décrire des mouvements de va-et-vient ou en spirale, ou autres, dans le plan de chacun de ces feuillets, de manière à les éroder successivement jusqu'au fond de la cavité à éroder. Les moyens informatiques mentionnés ci-dessus sont reliés à un module de compensation d'usure, luimême relié à la commande numérique tridimensionnelle de la machine EDM qui contrôle le mouvement 3D relatif entre l'électrode-outil et la pièce à éroder. Ce compensateur d'usure

- détermine l'usure longitudinale théorique de l'électrode-outil à partir de paramètres technologiques préexistants et de caractéristiques de sa géométrie, et calcule une avance axiale additionnelle (ou une grandeur correspondante) destinée à compenser en continu cette usure longitudinale, de sorte à maintenir son extrémité active parallèle au plan de la couche à évider;
- adapte la compensation de l'usure aux variations prévisibles, le long du trajet, de la prise latérale théorique de matière (par exemple lors du balayage des "festons" restant sur les bords du feuillet en cours , ou lorsqu'on passe du premier sillon tracé dans un feuillet au sillon adjacent suivant);
- ajuste aussi cette compensation à partir de quelques mesures de la diminution réelle de longueur de l'électrode-outil ou de la profondeur réelle déjà usinée, réalisées en début d'usinage, ce qui permet de déduire le taux d'usure volumique réel et d'adapter en conséquence la valeur de l'usure théorique, et
- transmet les signaux correspondants à l'unité de contrôle tridimensionnel.

Toutefois, ce dispositif connu ne tient pas compte de la différence entre la forme théorique de l'extrémité active des électrodes et sa forme réelle. En particulier, il néglige les phases transitoires au cours desquelles l'électrode-outil s'use avant de prendre une forme stationnaire (ou asymptotique), l'usure imprimant sa forme à son extrémité active (entrée dans la pièce, début et fin d'un feuillet, modification programmée de l'épaisseur des feuillets ou de l'angle de compensation, changement d'outil, soit pour remplacer une électrode usée, soit pour changer le type d'électrode, accidents géométriques sur la surface à usiner ou pour tout autre cause aléatoire). De plus, la forme stationnaire utilisée par le dispositif connu pour simuler l'usure de l'outil suppose que son rayon (et donc la prise latérale) varie linéairement entre le haut et le bas de la couche. Or ce n'est vrai que dans un cas limite, rencontré dans la réalité seulement pour l'usinage dans le plein. En fait, dans le cas par exemple d'une électrode tubulaire, son extrémité active a en général une forme parabolique plus ou moins accentuée et non la forme tronconique théorique.

Le dispositif connu ne tient pas compte non plus des différences d'état de surface, en particulier lors du passage de la première couche (surface rectifiée) à la suivante dont l'état résulte du régime d'usinage. De plus, certains paramètres ne sont pas connus avec précision ou peuvent varier en cours d'usinage, tels le positionnement des électrodes (outil et pièce), la concentricité de l'électrode-outil, le gap (distance interélectrodes).

Le cumul de toutes ces différences entre la réalité et l'univers idéal de la simulation peut conduire à une certaine erreur sur l'avance programmée par le module de compensation. Cette erreur va provoquer une erreur sur la profondeur du sillon tracé par l'électrode-outil, donc sur l'épaisseur des feuillets érodés, erreur qui s'additionne de feuillet en feuillet pour donner une pièce dont la cote Z peut différer notablement de la cote souhaitée.

Cette erreur de profondeur entraine non seulement une erreur sur le profil de l'extrémité active de l'outil mais aussi sur la prise latérale de matière (suite à la double variation de la profondeur du sillon et du profil de l'extrémité active).

De plus, l'usinage selon la présente invention étant réalisé à forte usure, donc à très grande vitesse, les stratégies existant dans la commande numérique risquent d'être insuffisantes pour éviter un dépassement de l'outil aux changements de direction de sa trajectoire. Or le chemin d'outil étant un balayage, ces changements de directions sont très fréquents.

Enfin, le dispositif connu ne permet pas de "simuler" véritablement l'usinage, car il ne prévoit aucun moyen pour évaluer la variation de la prise de matière et en déduire une programmation de la vitesse d'usinage en fonction de l'abcisse curviligne.

Le but de la présente invention était donc l'élaboration d'une méthode de préparation d'un usinage par fraisage EDM qui

- simulerait véritablement l'usinage en calculant la prise de matière théorique et la vitesse d'usinage correspondante en chaque point de la trajectoire, et qui
- prendrait en compte les divers facteurs agissant sur l'usure réelle de l'électrode-outil, mais sans modifier le principe du module de compensation d'usure existant et donc sans avoir recours à une adaptation continue de l'avance additionnelle en réponse à un contrôle continu de l'usure longitudinale.

Un autre but accessoire était l'introduction dans cette préparation de l'usinage d'une stratégie anticipant les virages de la trajectoire de manière à prévenir les dépassements de l'outil provoqués par les inerties et temps de réponse du dispositif EDM.

L' objet de la présente invention est ainsi une unité de simulation, destinée en particulier à être associée au module de compensation d'usure connu pour réaliser une vraie simulation de l'usinage en calculant la prise de matière théorique et la vitesse d'usinage en chaque point des parcours plans à usure nulle et pour corriger, par un asservissement en temps réel, la valeur théorique de la compensation. Elle est définie aux revendications 1 à 7.

C'est aussi une méthode de préparation assistée par ordinateur d'un usinage par fraisage EDM telle que définie à la revendication 8 et l'utilisation, telle que définie à la revendication 9, de cette unité de simulation.

L'unité de simulation selon la présente invention comporte donc un module d'asservissement et un module de simulation des vitesses d'usinage.

Comme décrit dans EP 555.818, la forme 3D de la pièce à usiner est décomposée, grâce à un module de programmation, en une superposition de parcours d'outil plans à usure nulle, programmés de préférence sous forme de segments de droite. Ce module peut reconnaître les poches et les ilots, réaliser les reprises de matière avec de plus petites électrodes et la création automatique de fichiers d'usinage pour chaque feuillet. Ces fichiers sont envoyés au compensateur d'usure et au simulateur de vitesses d'usinage, objet de la présente invention.

L'invention est décrite en prenant l'exemple d'électrodes tubulaires car elles ont de nombreux avantages, en particulier celui de permettre l'usinage de fonds plats; leur utilisation en fraisage EDM par couches fait d'ailleurs l'objet d'une demande de brevet parallèle (E. 227); toutefois d'autres formes à symétrie de révolution peuvent être envisagées, tel des cylindres pleins, éventuellement à extrémité hémisphérique. On utilise donc de préférence des tubes cylindriques; ils ont en général de 0,5 à 20 mm de diamètre. Les diamètres inférieurs peuvent poser des problèmes car ils manquent de rigidité et les forces d'usinage risquent de les faire flamber et marquer la pièce.

L'épaisseur et l'inclinaison des feuillets peuvent soit être les mêmes pour tout le volume à décomposer, soit varier en fonction de certains critères, en particulier de la forme à éroder et de la précision et qualité de surface désirées; de plus, plus le feuillet est mince, plus la différence entre cylindre théorique et forme réelle de l'outil est faible, donc plus la simulation se rapproche de la réalité ; enfin, comme les phases transitoires ne durent que le temps pour l'outil de s'user d'une épaisseur de couche, on a évidemment intérêt à travailler avec des feuillets minces; toutefois des feuillets épais permettent d'usiner à fort régime et d'utiliser des électrodes à fort diamètre. En effet, l'épaisseur du feuillet dépend aussi du diamètre et de l'épaisseur de la paroi de l'électrode-outil; en général, elle a au maximum la valeur de l'épaisseur de la paroi du tube et au minimum celle du gap. Donc le programmateur devra trouver le bon compromis, et ne pas multiplier sans raison le nombre de feuillets et rallonger ainsi la durée de l'usinage. Lorsqu'on utilise de forts régimes, les feuillets peuvent être épais de plusieurs dixièmes de mm; pour la finition, on divise ces couches en couches plus fines (quelques centièmes de mm pour les régimes fins); ceci permet d'ailleurs d'éliminer les "escaliers" qui apparaissent sur les bords des couches érodées en ébauche et sont d'autant plus marqués que ces couches d'ébauche sont plus épaisses.

Comme déjà mentionné, la forme stationnaire prise par l'extrémité active d'une électrode tubulaire est tronconique en première approximation, en réalité avec une forme parabolique plus ou moins accentuée. Or, la demanderesse a mis en évidence que, de façon surprenante, il est possible de simplifier la programmation des parcours plans en ne tenant plus compte de la forme réelle du profil de cette extrémité active, tout en obtenant des résultats très satisfaisants. Par exemple, si l'outil est un tube de rayon extérieur R et de rayon intérieur r, au lieu de voir l'outil sous la forme d'un tronc de cône dont la base inférieure est un cercle de diamètre 2r et la section supérieure un cercle de diamètre 2R, le programmateur le voit sous forme d'un cylindre de rayon r.

Le mode de balayage est choisi d'abord en fonction de la forme de la pièce et de chacun des feuillets. Il peut varier d'un feuillet à l'autre pour éviter que le même défaut ne s'additionne de feuillet en feuillet. Un choix judicieux de ce mode permet aussi de minimiser les erreurs dues aux différences entre réalité et simulation, de maintenir autant que possible la prise latérale constante et de réduire les phases transitoires.

Signalons aussi que le pas du balayage peut être différent du diamètre intérieur de l'outil, et qu'il peut être avantageux d'augmenter ce pas afin de réduire la longueur de trajet.

Contrairement à tous les usinages EDM connus, on a intérêt en fraisage EDM par couches à usiner avec un régime à forte usure (en général avec un taux volumique de 20 à 50 %), car celà favorise l'apparition de la forme asymptotique de l'outil; comme cette usure est compensée, il n'est plus utile de se priver d'aller vite pour économiser de l'électrode. Ces régimes ont beaucoup d'autres avantages que le fort enlèvement de matière: meilleur état de surface, meilleure stabilité. De plus la simulation y est plus proche de la réalité, car les phases transitoires sont plus courtes, puisqu'elles ne durent que le temps pour l'outil de s'user d'une épaisseur de couche.

On a évidemment intérêt à utiliser un outil de fort diamètre pour enlever un maximum de matière sur les grandes surfaces des divers parcours plans (ébauche) et à rebalayer certains endroits de ce parcours avec une électrode plus fine, afin de se glisser, par exemple, derrière un ilot proche du bord ou partout où les grosses électrodes ne peuvent se faufiler, ou encore pour améliorer les états de surface (reprise, finition).

Le programmateur de parcours d'outil plans permet ainsi d'utiliser plusieurs types d'électrodes, de modifier en conséquence l'épaisseur des feuillets et le régime d'usinage et d'optimiser les choix possibles, en particulier celui des divers types d'outil et modes de balayage, de façon à trouver les parcours les plus avantageux et les plus performants.

L'unité de simulation selon la présente invention comporte donc un module pour simuler les vitesses d'usinage à usure nulle; selon le mode de réalisation de la présente invention, il peut être soit distinct du compensateur, soit intégré à ce dernier. Dans d'autres variantes de la présente invention, ces deux modules sont intégrés à la commande numérique de la machine EDM. Enfin, ils peuvent être intégrés avec le programmateur de parcours d'outil plans décrit ci-dessus et le module d'asservissement des couches décrit plus loin afin de former une unité de préparation de l'usinage indépendante de la machine EDM.

Les liaisons entre le programmateur et le simulateur de vitesses d'usinage et le compensateur d'usure sont très faciles grâce aux fichiers d'usinage et de gestion élaborés par ce programmateur. Signalons que selon l'une des formes d'exécution préférées de l'unité de simulation selon la présente invention, les parcours plans sont décrits sur ces fichiers d'usinage sous forme d'une succession de segments de droite. Un premier élément du simulateur de de vitesses d'usinage calcule le volume usiné (ou la prise de matière latérale) en fonction de l'abcisse curviligne, de préférence pour chacun de ces segments. Selon une variante, cet élément est disposé entre le programmateur de parcours d'outil et le simulateur de vitesses d'usinage et le compensateur d'usure; c'est lui qui reçoit les fichiers d'usinage portant les parcours plans à usure nulle, et transmet ses fichiers portant une simulation de la prise de matière en fonction de l'abcisse curviligne aux deux autres modules, ce qui leur permet de programmer ensuite la compensation d'usure et la vitesse d'usinage à usure nulle pour chaque point ou segment d'usinage XY, ainsi que la descente en Z vers le feuillet suivant.

Le compensateur d'usure a déjà été décrit dans la demande de brevet européenne EP 555818 de la demanderesse. Selon une variante de la présente invention, en plus du calcul de la compensation théorique, ce module peut aussi calculer les longueurs d'outil consommées et déterminer les points de la trajectoire où il faut commander le remplacement d'une électrode usée ainsi que le nombre d'électrodes nécessaires à l'usinage. Selon d'autres variantes, il est agencé pour effectuer la correction en Z correspondant à une phase transitoire résultant d'un changement d'électrode. De plus, il est relié au module d'asservissement décrit plus loin.

Avant de décrire le module de simulation de la vitesse d'usinage à usure nulle, signalons qu'une simulation de l'usinage telle que réalisée par la présente invention paraissait utopique, irréalisable a priori. Or, en plus des avantages attachés à l'utilisation d'électrodes tubulaires, la demanderesse a mis en évidence plusieurs circonstances qui l'ont rendue possible: la possibilité de simuler indépendamment la compensation d'usure et la vitesse d'usinage; celle d'utiliser, sans risque pour la géométrie de la pièce finie, des hypothèses simplificatrices pour simuler la prise de matière et la vitesse d'usinage; enfin celle de corriger pratiquement tous les défauts en n'agissant que sur la compensation d'usure.

Signalons également que la simulation peut être encore simplifiée grâce à un choix judicieux du mode de balayage des feuillets, par exemple de manière à avoir une prise de matière aussi constante que possible.

Rappelons enfin la double propriété très avantageuse du système de compensation d'usure décrit dans la demande EP 555 818 de la demanderesse et utilisé dans la présente invention:

- l'amortissement des défauts de surface: ils disparaissent après érosion de plusieurs feuillets;
- sans intervention du compensateur d'usure selon la présente invention, la trajectoire suivie par l'extrémité active de l'électrode-outil a tendance à rester parallèle à la surface à usiner, même si celle-ci n'est pas parfaitement plane. Comme expliqué dans EP 555818, il y a autorégulation de la profondeur érodée. Ces montées ou descentes de l'extrémité active ont lieu après une (courte) période transitoire, et ces retards "gomment" peu à peu, à chaque passage, ces défauts.

En effet, la simulation de la compensation d'usure peut être effectuée indépendamment de celle des vitesses d'usinage, car l'usure de l'électrode-outil est compensée en lui imprimant une avance additionnelle selon l'axe Z proportionnelle à sa vitesse dans le plan XY. Elle va pénétrer dans la matière en oblique par rapport au feuillet à éroder, et de manière que sa pointe se déplace parallèlement au plan du feuillet. Donc, et c'est l'une des originalités de la méthode utilisée dans la présente invention, la valeur de cet angle de compensation est indépendante de la vitesse de l'outil le long du parcours plan de chaque feuillet. D'ailleurs, dans l'un des modes d'exécution préférés de la présente invention, alors que le compensateur d'usure effectue ses calculs en supposant que l'extrémité active de l'électrode-outil est tronconique, la forme théorique utilisée pour simuler les variations de la prise de matière et de la vitesse d'usinage en fonction de l'abcisse curviligne est un cylindre de rayon (R + gap).

Toutefois, selon d'autres variantes, l'unité de simulation de la présente invention peut calculer, directement à partir de la simulation des prises de matière, des vitesses d'usinages dont la composante en Z inclut la compensation d'usure.

Par ailleurs, la plupart des défauts dus aux erreurs sur le volume réel de matière enlevée sur la pièce résultent de différences entre simulation et réalité: phases transitoires et forme réelle de l'extrémité active (tronconique / plus ou moins parabolique) différant de sa forme théorique, cylindrique, utilisée en simulation. Il est surprenant qu'on puisse en général les éliminer uniquement grâce au module d'asservissement qui n'agit que sur le module de compensation d'usure, sans risque pour la géométrie de la pièce, simplement par asservissement de l'épaisseur des feuillets et sans qu'il soit nécessaire de corriger la simulation et de renoncer à la forme théorique, simplifiée, de l'outil.

La simulation des prises de matière et des vitesses d'usinage ne peut tenir compte des défauts dus aux phases transitoires apparaissant lors d'un changement d'électrode, car c'est en général le compensateur d'usure (ou la commande numérique de la fraiseuse EDM) qui détermine les endroits du parcours où on change les électrodes. Toutefois, certaines variantes du simulateur de vitesses sont agencées pour évaluer la longueur de trajectoire, ou la surface ou le volume usiné pendant une phase transitoire et introduire une correction correspondante, suite par exemple à une indication du compensateur d'usure signalant un tel changement ou suite à une indication du programmateur de parcours d'outil en liaison avec le mode de balayage choisi, ou par exemple au début de chaque feuillet. Ces phases transitoires sont d'autant plus courtes que la paroi du tube est mince et que la prise de matière est importante et le taux d'usure élevé. On peut en général les négliger aux taux d'usure utilisés; ainsi, pour un tube, respectivement de 6 et de 4 mm de rayon extérieur et intérieur, usinant avec 32% d'usure un feuillet de 6 mm d'épaisseur, la phase transitoire va durer sur un parcours de 8,7 mm.
Signalons que la descente en Z au passage d'un feuillet au feuillet suivant peut être verticale ou oblique. Dans le premier cas, il y a usinage d'une carotte et déformation de l'intérieur du tube et donc phase transitoire particulière.

Par ailleurs, comme la simulation de la variation de la prise de matière et de la vitesse d'usinage au long de la trajectoire ne tient pas compte de la forme tronconique de l'outil, le volume enlevé en théorie sur les bords du feuillet, ou en usinage dans le plein, sera erroné, surtout s'il s'agit du premier feuillet. En effet la simulation va voir plus de matière qu'il n'en existe, la vitesse simulée sera trop faible et la compensation d'usure trop forte. Ainsi, dans l'hypothèse d'une extrémité tronconique, la pente par rapport au plan du feuillet de la direction oblique suivie par l'outil pour compenser son usure, devrait être égale à

$$\frac{U.E}{\pi.e}$$

avec
U, le taux d'usure volumique,
E. l'épaisseur du feuillet
e l'épaisseur de la paroi de l'outil.
Or, sa valeur calculée à partir de la prise de matière erronée correspondant à une extrémité cylindrique est de

$$\frac{U.E}{\pi.e} \cdot \left[ \frac{1}{1 - (e/2R)} \right]$$

avec R le rayon extérieur de l'outil.
Plus le périmètre ou les trajets dans le plein sont longs par rapport à la surface du feuillet, plus cette erreur est grande; elle dépend donc de la forme du feuillet et du mode de balayage. Pour ce qui est de la compensation de l'usure, cette erreur sera rattrapée en quelques feuillets par l'asservissement décrit plus loin.
Cette erreur sera plus faible pour les feuillets suivants, car le bout tronconique de l'outil a laissé un bourrelet de section triangulaire sur les bords, qui sera enlevé sans être vu par la simulation.

C'est d'ailleurs grâce à un avantage inattendu des électrodes tubulaires que ce type de défaut n'apparait plus au cours du balayage des feuillets, après usinage du premier sillon. En effet, pour un "pas" de balayage de 2r (r est le rayon intérieur du tube-électrode), que l'on considère la forme tronconique de l'outil ou sa forme cylindrique théorique, la prise de matière latérale a la même valeur: un parallèlogramme de surface 2r.E pour un outil tronconique, un rectangle de même surface 2r.E pour un outil cylindrique.

Toujours dans les cas où la forme tronconique de l'outil laisse de la matière qui du point de vue de la simulation (qui ne tient pas compte de cette forme tronconique) a été otée, le défaut qui est en général négligeable, (car globalement la quantité de matière enlevée reste la même), peut avoir des conséquences s'il apparait en fin de feuillet. En effet, la longueur de l'électrode n'est alors plus représentative de la cote réelle du feuillet, car elle a usiné sans compensation d'usure; l'asservissement peut alors en être destabilisé. Plus grave: la simulation n'a pas prévu cet ilot et n'a donc pas adapté la vitesse; l'outil va donc le percuter à grande vitesse avec toutes les conséquences d'une telle collision.

Signalons toutefois que la méthode de préparation de l'usinage selon la présente invention a prévu certains modes de simulation de la prise de matière et de la vitesse d'usinage qui tiennent compte de certaines de ces différences, en particulier de la forme réelle. Ainsi, dans l'un de ces modes, on effectue des simulations à des cotes intermédiaires prises dans le feuillet en prenant comme rayon pour la forme théorique celui du tronc de cône, ou de sa forme parabolique dérivée, à la même cote, et on intègre. La simulation peut d'ailleurs utiliser les décompositions en feuillets minces et les parcours plans établis par le programmateur de parcours d'outil pour la finition. Ceci permet d'ailleurs de mieux mémoriser avant finition l'état intermédiaire du feuillet, en particulier de ses bords.

Le simulateur de vitesses d'usinage peut être aussi agencé pour modifier certains paramètres en anticipant les virages de manière à éviter les dépassements. En effet, si on utilise uu mode de balayage en va-et-vient, les chemins d'outil comportent de nombreux virages; selon une variante, ce module est apte à évaluer le dépassement qui se produirait du fait de la grande vitesse d'usinage et de l'inertie et du temps de réponse de la machine EDM qui ne peut en général réaliser de brusques changements de direction à grande vitesse; s'il est trop important, le module élabore une stratégie qui anticipe ces changements de direction (ainsi que de brusques modification de la prise matière, lors d'un accident géométrique dans la pièce, par exemple) en commandant une réduction appropriée de la vitesse d'usinage, de manière que la trajectoire reste dans les tolérances données.

De plus, le simulateur de vitesses d'usinage peut être aussi agencé pour mémoriser l'état intermédiaire d'un feuillet avant sa reprise ou retouche avec une électrode de plus petit rayon ou de paroi plus fine ou sa finition, ainsi que son état après exécution complète.

Enfin, l'unité de simulation de la présente invention peut aussi présenter un élément relié au simulateur de vitesses et au compensateur d'usure et destiné à générer un fichier de commande pour la commande numérique de la machine EDM; ce dernier peut par exemple contenir les ordres d'enchaînement des fichiers d'usinage, des changements ou remplacement d'outils et de mesures de calibration et de cotes nécessaires à l'asservissement, ainsi que le nombre et le type d'électrodes nécessaires et la longueur des parcours.

L'unité de simulation selon la présente invention comporte aussi un dispositif de contrôle et correction, appelé par la suite "module d'asservissement (des couches)". En effet, la prise latérale de matière, la forme stable prise par l'extrémité active de l'électrode-outil et la profondeur du sillon tracé par l'électrode-outil sont susceptibles de varier tout au long de l'usinage et pas seulement aux endroits prévus par le compensateur d'usure. Or, grâce à la stratégie d'usinage utilisée dans la présente invention, toutes ces variations se traduisent par une variation de la profondeur de sillon, donc de l'épaisseur du feuillet en cours d'érosion.

Rappelons qu'à partir de quelques mesures de calibrage de la diminution réelle de longueur de l'électrode-outil, réalisées en début d'usinage, le compensateur d'usure décrit dans EP 555818 tient compte en particulier du taux d'usure volumique réel pour programmer la compensation de l'usure théorique de l'outil.

Mais ce taux, ainsi que le gap sont susceptibles de varier en cours d'usinage suite par exemple à des modifications de température, à l'évolution de la contamination du diélectrique, à des variations de la structure superficielle de la pièce après la première passe. Suite à ces variations, à d'autres erreurs sur l'avance programmée, à des phénomènes réels non pris en compte par la simulation,ou à des défauts à la surface du feuillet , la compensation de l'usure telle que programmée lors de la préparation de l'usinage, ne sera plus capable de maintenir l'extrémité active de l'électrode-outil parallèle à la surface à usiner. De plus d'autres montées ou descentes de l'extrémité active sont dues au phénomène d'autorégulation décrit ci-dessus.

Le feuillet n'aura donc pas l'épaisseur qui lui avait été attribuée et en fonction de laquelle a été calculée la compensation de l'usure le long du chemin d'outil défini dans ce feuillet. Cette épaisseur théorique conditionne aussi la cote théorique du fond du feuillet. A l'inverse, connaissant la cote réelle de ce dernier, le module d'asservissement de la présente invention est agencé pour en déduire l'épaisseur réelle du feuillet usiné, l'épaisseur que devrait avoir le feuillet suivant pour rattraper la cote et donc le facteur dont il faut corriger l'avance de compensation prévue par simulation pour usiner un feuillet de cette épaisseur. Ainsi, en comparant les cotes en Z réelles des premières couches réalisées avec les cotes théoriques, il élabore un facteur de correction qui corrige le signal de compensation de l'usure émis par le compensateur d'usure. Avec cette stratégie, il est en général possible d'éliminer une différence entre simulation et réalité de 40% par exemple, en une dizaine de couches. Il n'est donc pas nécessaire de connaître avec précision et de contrôler en cours d'usinage les variations de la forme stable prise par l'extrémité active de l'électrode-outil, ni celles de la prise de matière, ni les autres facteurs cités ci-dessus.

Voici, à titre d'exemple, l'une des stratégies particulières qui peut être suivie par ce module d'asservissement:

- le facteur de correction Kn appliqué au signal de compensation programmé pour éroder le feuillet n + 1 a pour formule

$$Kn = 1 + \frac{k.\delta En + k'.\Sigma \delta Ei + k''\Sigma \delta Zi}{E}$$

E est l'épaisseur de couche théorique qui a été indiquée au module de compensation;
Zn est la cote Z du feuillet n;
$\delta En$, l'erreur sur l'épaisseur de couche;
$\Sigma \delta Ei = Z_n$ théorique - $Z_n$ mesuré
$\Sigma \delta Zi = \Sigma (Z_i$ théorique- $Z_i$ mesuré)

Selon l'une des variantes possibles, le facteur de correction comporte un facteur de correction de base, en général égal à 1, qui peut être modifié directement par l'opérateur s'il décide de modifier l'un des paramètres avec lequel a été fait la simulation de l'usinage.

De plus, sans modifier la programmation, en modifiant ce facteur de base, l'opérateur peut décomposer au cours de l'usinage une couche programmée en plusieurs couches minces.

Enfin, le choix des points de la trajectoire où on mesure la longueur de l'outil est important. On a vu qu'ils doivent en particulier correspondre à une forme stationnaire de l'outil, sa cote Z étant alors représentative de la cote Z de la couche. Aussi, certaines variantes de l'unité de la présente invention présentent des moyens aptes à définir les point optimaux pour ces mesures.

Le dispositif et la méthode pour fraisage EDM par couches de la présente invention présentent les avantages déjà mentionnés ci-dessus, en particulier la suppression des électrodes de forme qui sont remplacées par une simulation sur ordinateur. Il suffit d'avoir un stoc d'électrodes normalisées. Ceci permet de raccourcir les délais de fabrication et de réduire les prix de revient en supprimant tous les frais liés à l'étude et au façonnage des des électrodes de forme; il n'est plus nécessaire de dessiner et faire façonner par les spécialistes d'un atelier de mécanique les nombreuses électrodes correspondant à une pièce 3D complexe, parfois plusieurs centaines, ni de les contrôler, centrer, aligner entre elles et par rapport à la pièce, de préparer les divers chemins d'outil et l'enchainement des régimes d'usinage, modes d'injection, etc... habituels en enfonçage EDM. Selon la présente invention, on peut récupérer pour la préparation de l'usinage les données CAD qui ont servi à concevoir la pièce.

De plus, le fraisage EDM par couches est beaucoup plus facile à mettre en oeuvre que l'enfonçage EDM; il peut ainsi être facilement réalisé en continu. Mais surtout, c'est l'unité de simulation selon la présente invention (et son concepteur), et non le client utilisateur de la machine EDM, qui traite tous les problèmes critiques en électroérosion, tels l'usure, la matière et le nombre d'électrodes-outil, le calcul des sous-dimensions, offsets et marges de sécurité, les particularités liées à la forme de la pièce, les stratégies d'usinage, le choix et le réglage de l'injection de diélectrique, etc...

## Revendications

1. Dispositif pour usiner une pièce à trois dimensions par fraisage EDM par couches, comprenant

    - un organe pour entraîner en rotation à grande vitesse une électrode-outil de forme simple,
    - une unité de commande numérique, contrôlant le mouvement tridimentionnel relatif entre l'électrode-outil et la pièce à éroder,
    - un compensateur d'usure relié à l'unité de contrôle tridimentionnel, évaluant l'usure longitudinale théorique de l'électrode-outil et programmant une avance axiale additionnelle de l'outil destinée à compenser en continu cette usure longitudinale de manière à maintenir son extrémité active parallèle au plan de la couche à éroder et
    - des moyens informatiques pour mémoriser le volume de la cavité à éroder sous forme d'une superposition de fines couches virtuelles parallèles, simuler une trajectoire de l'électrode-outil telle que sa pointe balaie sillon par sillon, successivement chacune de ces couches,

    ce dispositif étant caractérisé par une unité de simulation pour calculer une prise de matière théorique le long de la trajectoire simulée pour l'outil, programmer les vitesses d'usinage correspondantes en chaque point de cette trajectoire, et pour envoyer les signaux correspondants à l'unité de contrôle tridimentionnel,

les moyens informatiques transmettant les signaux ou fichiers d'usinage correspondants à leur simulation de la trajectoire vers le compensateur d'usure et l' unité de simulation.

2. Dispositif selon la revendication 1, dans lequel l' unité de simulation comporte aussi un module d'asservissement, monté entre le compensateur et l'unité de contrôle tridimentionnel et relié à des moyens de mesure de la longueur de l'électrode-outil et/ou de la cote en Z du fond du feuillet en cours d'érosion, et agencé pour élaborer un facteur de correction du signal de compensation d'usure.

3. Dispositif selon la revendication 1, dans lequel le simulateur de vitesses d'usinage est aussi agencé pour anticiper les virages de la trajectoire de manière à prévenir les dépassements de l'outil provoqués par les inerties et temps de réponse du dispositif EDM.

4. Dispositif selon la revendication 1, dans lequel le simulateur de vitesses d'usinage est programmé pour simuler les vitesses d'usinage le long de la trajectoire d'un outil constitué par un tube cylindrique et en attribuant à cet outil la forme d'un cylindre de diamètre égal au diamètre extérieur de ce tube.

5. Dispositif selon la revendication 2, dans lequel le module d'asservissement est relié à des moyens agencés pour définir les point optimaux pour ces mesure de la longueur de l'électrode-outil et/ou de la cote en Z du fond du feuillet, en particulier ceux qui correspondent à une forme stationnaire de l'outil, sa cote Z étant alors représentative de la cote Z du feuillet.

6. Dispositif selon la revendication 1, dans lequel le programmateur de parcours d'outils plans est programmé pour simuler la trajectoire d'un outil constitué par un tube creux cylindrique et en attribuant à cet outil la forme d'un cylindre de diamètre égal au diamètre intérieur de ce tube.

7. Dispositif selon la revendication 1, dans lequel le programmateur de parcours d'outils plans est programmé pour élaborer les parcours d'outil plans à usure nulle sous forme de segments de droite.

8. Méthode de préparation assistée par ordinateur d'un usinage par électroérosion avec de fines électrodes rotatives de forme simple et avec un régime à fort taux d'usure, réalisé sur une machine EDM multiaxes, cette méthode comportant les étapes suivantes:
- on mémorise le volume en trois dimensions de la pièce à éroder sous forme d'une superposition de fines couches virtuelles parallèles,
- on programme pour chacune de ces couches des parcours d'outil plans, à usure nulle, et on envoye les signaux correspondants vers un compensateur d'usure et un simulateur de vitesses d'usinage reliés à l'unité de contrôle tridimentionnel de la machine EDM, de manière que l'extrémité de l'électrode-outil balaie, sillon par sillon, successivement chacune de ces couches,
- un compensateur d'usure évalue une usure longitudinale théorique de l'électrode-outil à partir de paramètres technologiques préexistants et de sa géométrie, programme le long de ces parcours plans une avance axiale additionnelle de l'outil, compensant en continu cette usure longitudinale de manière à maintenir son extrémité active parallèle au plan de la couche à évider, et envoye des signaux correspondants à l'unité de contrôle tridimentionnel de la machine EDM, et
- un simulateur calcule une prise de matière théorique, programme les vitesses d'usinage correspondantes en chaque point de ces parcours plans, et envoye des signaux correspondants à l'unité de contrôle tridimentionnel de la machine EDM.

9. Utilisation du dispositif selon la revendication 1, pour un usinage par électroérosion avec de fines électrodes rotatives de forme simple et avec un régime à fort taux d'usure, dans laquelle les défauts de la simulation d'usinage assistée par ordinateur selon la revendication 8 sont corrigés en cours d'usinage simplement en modifiant le signal émis par le compensateur d'usure de manière à asservir l'épaisseur de la couche en cours d'érosion à l'usure réelle de l'outil et/ou à sa cote en Z réelle.

Office européen
des brevets

**RAPPORT DE RECHERCHE EUROPEENNE**

Numero de la demande

EP 94 11 2722

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X | EP-A-0 555 181 (CHARMILLES TECHNOLOGIES) 18 Août 1993 | 1,8 | B23H7/20 B23H7/30 |
| D,A | * colonne 3, ligne 54 - colonne 4, ligne 12 * <br> * colonne 7, ligne 30 - ligne 39 * <br> * abrégé; revendications; figures * <br> --- | 2-7,9 | |
| D,A | J. JAPAN SOC. ELECTRICAL MACHINING ENG., vol.17, no.34, 1983 pages 30 - 42 M. TSUCHIYA ET AL. 'Three-dimensional numerically controlled EDM using column shaped electrode' * le document en entier * <br> --- | 1-9 | |
| D,A | PRECISION ENGINEERING, vol.10, no.3, Juillet 1988 pages 157 - 163 T.KANEKO ET AL. 'Three-dimensional numerically controlled contouring by electric discharge machining with compensation for the deformation of cylindrical tool electrodes.' * le document en entier * <br> ----- | 1-9 | |

DOMAINES TECHNIQUES RECHERCHES (Int.Cl.6)

B23H

Le présent rapport a été établi pour toutes les revendications

| Lieu de la recherche | Date d'achèvement de la recherche | Examinateur |
|---|---|---|
| LA HAYE | 15 Novembre 1994 | Haegeman, M |

EPO FORM 1503 03.82 (P04C02)